# FASCICULE DE BREVET EUROPEEN

(11) **EP 1 517 006 B1**
(45) Date de publication et mention de la délivrance du brevet: **29.07.2015**
(21) Numéro de dépôt: 04292229.4
(22) Date de dépôt: 17.09.2004
(51) Int. Cl.: F01D 11/00, F02C 7/28, F01D 25/24, F16J 15/08

(54) **Réalisation de l'étanchéité dans un turboréacteur pour le prélèvement cabine par un joint à brosse**
Gasturbine mit Bürstendichtung
Gas turbine brush seal arrangement for cabin air supply

(30) Priorité: 19.09.2003 FR 0311021
(43) Date de publication de la demande: 23.03.2005
(73) Titulaire: SNECMA, 75015 Paris (FR)
(72) Inventeur: Lepetre, Gilles, 91860 Epinay-Sous-Senart (FR); Marnas, Laurent, 77000 Vaux-le-Penil (FR)
(74) Mandataire: Intès, Didier Gérard André

(56) Documents cités:
- EP-A- 1 130 294
- US-A- 5 400 586

## Description

L'invention se rapporte à un turboréacteur comportant d'amont en aval, l'amont et l'aval étant définis par le sens de la circulation du flux primaire, un compresseur à haute pression, une grille de diffuseur et une chambre de combustion, ledit compresseur à haute pression comportant une virole externe délimitant radialement la veine dudit flux primaire et raccordée à une structure annulaire qui s'étend radialement vers l'extérieur, ladite grille de diffuseur comportant dans le prolongement axial de ladite virole externe de compresseur un carter externe raccordé à un jambage conique orienté vers l'arrière et délimitant en amont le fond de ladite chambre de combustion, ledit jambage étant lui-même raccordé à une virole externe de carter qui s'étend vers l'amont et est fixée à ladite structure annulaire par des moyens de fixation, ledit jambage, ladite virole externe de carter et ladite structure annulaire définissant une cavité autour de ladite grille de diffuseur, des orifices de prélèvement d'air étant ménagés dans ledit jambage pour mettre en communication le fond de chambre avec ladite cavité, ladite virole externe de carter étant équipée de bouches de sortie de l'air prélevé, et des moyens d'étanchéité étant prévus entre ladite structure annulaire et ledit carter externe de grille de diffuseur pour isoler ladite cavité de la veine du flux primaire.

Le prélèvement d'air nécessaire à la cabine de l'avion équipé d'au moins un turboréacteur est effectué en fond de chambre de combustion dans une zone où il perturbe le moins le rendement global du moteur. Le prélèvement s'effectue par les orifices du jambage, ce qui permet une implantation aisée des bouches de sortie de l'air prélevé. Cette disposition impose une étanchéité relative entre la veine du compresseur à haute pression et la cavité située au-dessus de la grille du diffuseur.

Cette étanchéité est d'autant plus difficile à réaliser que les déplacements relatifs entre la grille de diffuseur et la virole externe du compresseur sont de l'ordre de 1,5 mm dans la direction axiale et sensiblement du même ordre en radial, du fait des réponses thermiques et mécaniques des différentes pièces dans un environnement soumis à de fortes pressions pouvant atteindre 30 bars et à des températures élevées pouvant atteindre 650°C.

La technologie actuelle retenue pour assurer l'étanchéité entre le compresseur et le carter externe de la grille est du type joint à lamelle et contre-joint appuyés par des ressorts. Cette technologie permet en effet un déplacement suffisamment ample entre les deux pièces.

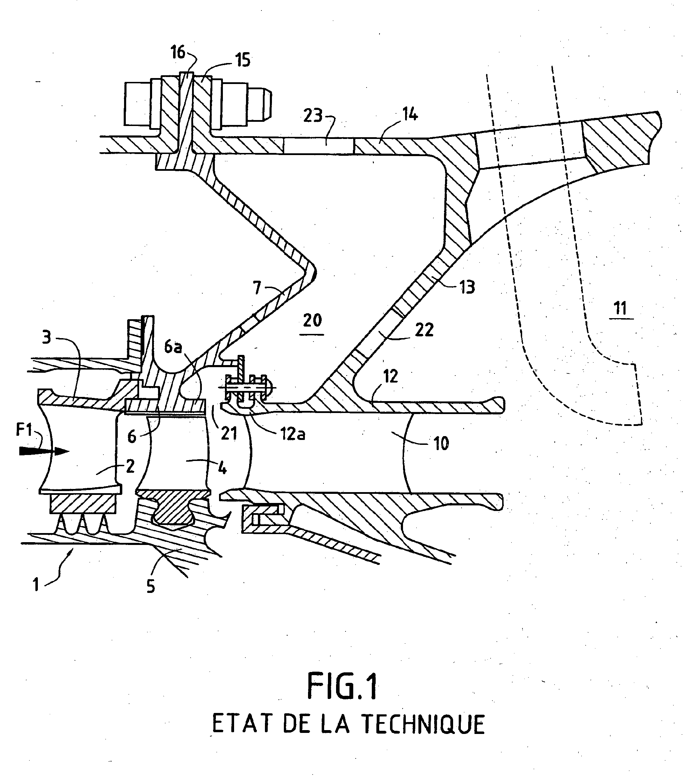

L'état de la technique est illustré par la figure 1 qui montre le dernier étage d'un compresseur à haute pression 1 d'un turboréacteur présentant, d'amont en aval dans le sens du flux primaire F1, une couronne d'aubes fixes 2 qui s'étendent radialement vers l'intérieur à partir d'un carter externe 3, suivie d'une couronne d'aubes mobiles 4 montées à la périphérie d'une roue de compresseur 5 et s'étendant vers l'extérieur jusqu'à une virole externe 6 de compresseur délimitant radialement avec le carter externe 3 la veine du flux primaire, cette virole externe 6 étant raccordée à une structure annulaire 7, ayant une section en V dans le plan contenant l'axe du turboréacteur, et s'étendant radialement vers l'extérieur et qui est fixée au carter externe du moteur par boulonnage.

En aval du compresseur 1 est prévue une grille de diffuseur 10 qui reçoit de l'air comprimé du compresseur 1 et la délivre vers une chambre de combustion 11. La grille 10 présente dans le prolongement axial de la virole externe 6 du compresseur 1 un carter externe 12 raccordé à un jambage conique 13 orienté vers l'arrière du turboréacteur, ce jambage 13 définit la paroi amont du fond de la chambre de combustion 11 et il est raccordé dan sa région radialement extérieure à une virole externe 14 de carter qui s'étend vers l'amont, et qui présente une bride amont 15 servant à la fixation par boulonnage de l'ensemble constitué par la chambre de combustion et le diffuseur sur une bride 16 radialement extérieure de la structure annulaire 7.

Une cavité 20, entourant la grille de diffuseur 10 est ainsi délimitée axialement par la structure annulaire 7 et le jambage 13, radialement à l'extérieur par la virole externe 14 de carter et radialement à l'intérieur par la portion aval 6a de la virole externe 6 de compresseur et par la portion amont 12a du carter externe 12, un interstice 21 séparant ces deux portions.

Le jambage 13 présente des orifices 22 de prélèvement d'air en fond de chambre et la virole externe 14 de carter est équipée de bouches de sortie 23 pour fournir un débit d'air pour l'aération de la cabine de l'avion ou pour le refroidissement d'autres éléments du turboréacteur.

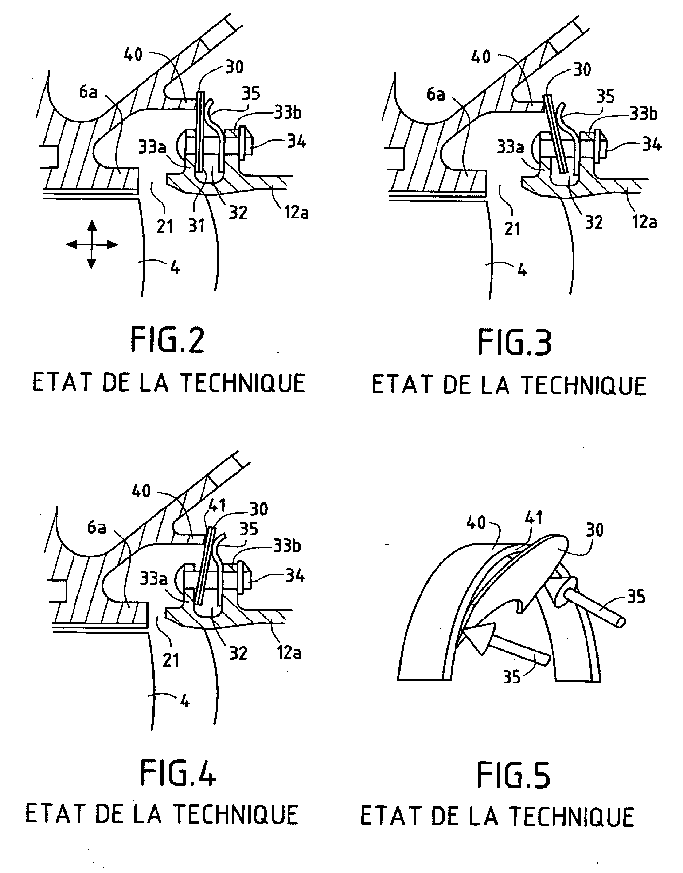

L'étanchéité entre la veine de compresseur et la cavité 20 est assurée, ainsi que cela est montré en détail sur la figure 2, par un joint sectorisé à lamelles 30 doublées de contrejoints 31, monté sur le pourtour de la portion amont 12a du carter externe 12 de la grille de diffuseur. A cet effet, cette portion aval 12a présente sur son pourtour une gorge 32 délimitée par deux brides, référencées 33a en amont et 33b en aval, qui comportent des perçages pour la fixation de rivets 34. Les lamelles 30 et les contrejoints 31 sont maintenus en appui sur la face aval de la bride amont 33a par des ressorts 35, et sont retenus par les rivets 34. Les ressorts 35 sont également retenus par les rivets 34. La portion radialement interne de la structure annulaire 7 présente un becquet annulaire 40 qui s'étend axialement dans la cavité 20 et dont l'extrémité se trouve au-dessus de la bride amont 33a en l'absence de déplacement axial entre la virole externe 6 du compresseur 1 et le carter externe 12 du diffuseur, comme cela est montré sur la figure 2.

Les ressorts 35 appuient sur les joints dans la zone annulaire séparant le becquet 40 de la bride amont 33a. D'autre part la pression de l'air est légèrement supérieure dans la cavité 20 par rapport à la pression dans la veine au niveau de l'interstice 21.

Les appuis des joints 30 côté becquet 40 et côté bride amont 33a comportent des surfaces convexes. Les efforts conjugués des ressorts 35 et de l'écart des pressions sur les deux faces des joints 30 appliquent les lamelles 30, qui sont planes, sur ces surfaces dans la configuration montrée sur la figure 2, ce qui assure l'étanchéité.

Dans certaines phase de vol, l'appui entre les lamelles 30 et le becquet 40 laisse un jeu de fuite, notamment lorsque le becquet 40 passe au-dessus de la gorge 32, comme cela est montré sur les figures 4 et 5. Entre deux ressorts consécutifs, les lamelles 30 s'écartent du becquet et seule la différence de pression entre les deux faces qui est faible peut empêcher la création de cet écartement. Il se produit alors un jeu de fuite 41 entre les lamelles et l'extrémité du becquet 40.

Lorsqu'au contraire la grille de diffuseur 10 s'éloigne du compresseur 1, comme cela est visible sur la figure 3, l'effort dû à l'écart de pression et l'effort des ressorts 35 permettent une étanchéité correcte, par déformation des lamelles 30.

Les doubles flèches montrées sur la figure 2 indiquent les déplacements relatifs axial et radial entre l'extrémité aval de la virole externe 6 de compresseur et l'extrémité amont du carter externe 12 de la grille de diffuseur 10.

Il est à noter en outre que la disposition de cette étanchéité portée par le carter externe 12 permet le montage de l'ensemble chambre de combustion et diffuseur, sur le compresseur par déplacement axial relatif dudit ensemble par rapport au compresseur, puis par boulonnage des brides externes 15 et 16.

Le but de l'invention est de proposer un turboréacteur, tel que mentionné dans l'introduction, dans lequel on assure l'étanchéité entre la cavité de prélèvement d'air à la cabine et la veine du flux primaire dans le compresseur quelle que soit la position relative entre la virole externe du compresseur et le carter externe de la grille du diffuseur. Un tel turboréacteur est défini selon les caractéristiques de la revendication 1.

L'invention atteint son but par le fait que les moyens d'étanchéité sont constitués par un joint à brosse fixé à la périphérie de la partie amont du carter externe de la grille du diffuseur, ledit joint comportant des soies qui s'étendent radialement vers l'extérieur et qui sont en appui sur la surface interne d'un manchon cylindrique solidaire de la structure annulaire et entourant ledit joint à brosse.

L'utilisation de joints à brosse dans des turbomachines est en soi connue (voir par exemple US 5,400,586), mais ce type de joint n'a jamais été utilisé pour assurer l'étanchéité de la cavité située entre le compresseur et l'ensemble diffuseur-chambre de combustion.

L'étanchéité est réalisée par la densité des soies et par leur souplesse qui leur permet de venir s'appuyer de façon optimale sur le manchon quelle que soit la position relative entre le manchon et le carter externe.

Le joint à brosse peut être sectorisé ou non. Il peut être fixé sur le carter externe de plusieurs manières.

Selon un premier mode de réalisation la partie amont du carter externe présente à sa périphérie une rainure, et le joint d'étanchéité est fixé dans la rainure par des moyens de fixation.

Selon un deuxième mode de réalisation, le joint à brosse est fixé par des moyens de fixation dans la rainure périphérique d'un anneau de section en U, et ledit anneau est fixé par soudure à la périphérie de la partie amont du carter externe de la grille de diffuseur.

Selon un troisième mode de réalisation le joint à brosse présente dans sa zone radialement intérieure un anneau métallique, et ledit anneau est fixé par soudure à la périphérie de la partie amont dudit carter externe.

D'autres avantages et caractéristiques de l'invention ressortiront à la lecture de la description suivante faite à titre d'exemple et en référence aux dessins annexés dans lesquels :
les figures 1 à 5 montrent l'état de la technique :
   la figure 1 étant une demi-coupe, selon un plan contenant l'axe du turboréacteur, de la partie aval d'un compresseur et du diffuseur, qui montre l'implantation de la cavité communiquant avec le fond de la chambre et dans lequel on prélève l'air pour la cabine de l'avion, et l'installation du joint d'étanchéité, selon l'état de la technique, entre cette cavité et la veine du flux primaire ;
   la figure 2 montre à plus grande échelle la disposition du joint d'étanchéité selon l'état de la technique ;
   la figure 3 montre la déformation du joint en cas d'augmentation de l'interstice entre la virole externe du compresseur et le carter externe de la grille du diffuseur ;
   la figure 4 montre la déformation de ce même joint en cas de diminution de cet interstice ; et
   la figure 5 est une vue en perspective du joint d'étanchéité en cas de diminution de l'interstice qui montre le jeu de fuite ;
   la figure 6 est une vue en coupe de la zone extérieure à la veine du flux primaire, située entre le compresseur et le diffuseur, et montre le système d'étanchéité du type joint à brosse selon un premier mode de réalisation de l'invention ;
   la figure 7 montre un deuxième mode de réalisation de l'invention ; et,
   la figure 8 montre un troisième mode de réalisation de l'invention.

L'état de la technique illustré par les figures 1 à 5 a été commenté ci-dessus et ne nécessite pas d'autres explications.

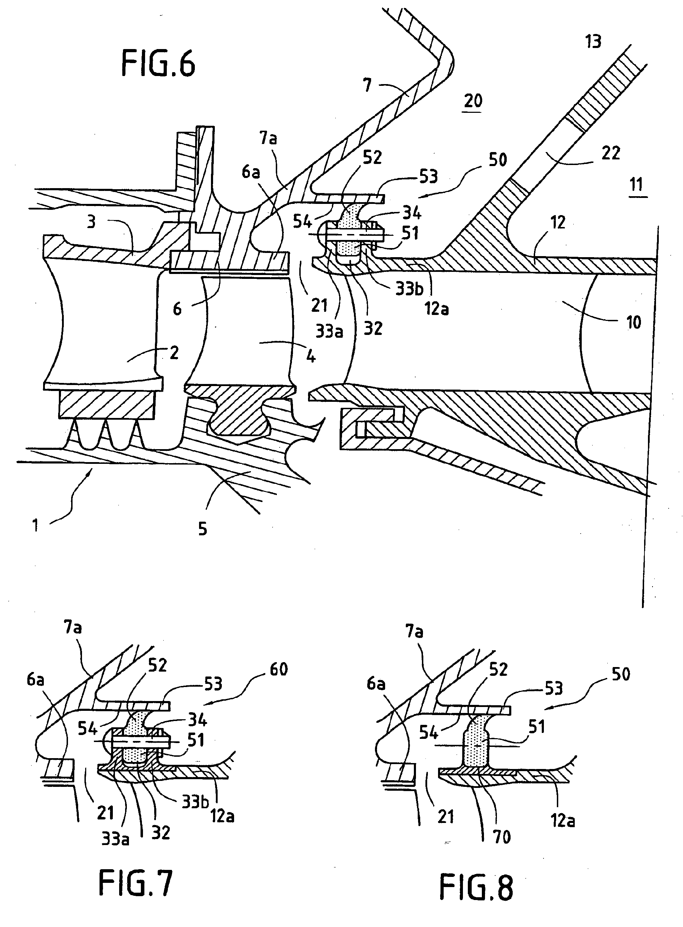

Les figures 6 à 8 montrent un dispositif d'étanchéité 50 du type joint à brosse disposé entre la partie radialement intérieure 7a de la structure annulaire 7, sensiblement parallèle au jambage 13, et la partie amont 12a du carter externe de la grille 10 du diffuseur. Sur ces figures 6 à 8, les pièces ou éléments identiques à ceux des figures 1 à 5 portent les mêmes références.

La figure 6 montre un premier mode de réalisation de l'invention. La partie amont 12a du carter externe 12 présente à sa périphérie une bride amont 33a et une bride aval 33b qui délimitent entre elles une gorge 32, dans laquelle est fixée au moyen de rivets 34, la portion radialement intérieure 51 ou corps d'un joint à brosses, à partir duquel s'étendent vers l'extérieur des soies 52. Le corps 51 peut être réalisé soit sous la forme de secteurs, soit sous la forme d'un anneau fendu, et sa largeur est fonction de la largeur de la gorge 32 afin qu'après la mise en place des rivets 34, l'étanchéité soit assurée au niveau de la gorge 32

Le becquet 40 de l'état de la technique illustré sur les figures 1 à 5 est ici allongé vers l'aval. Il se présente ainsi sous la forme d'un manchon 53 dont la surface interne 54 est cylindrique.

Les brides 33a et 33b et le joint à brosse 50 sont disposés à l'intérieur du manchon 53. La longueur des soies est calculée de telle manière que leurs extrémités libres soient toujours en appui sur la surface 54.

La souplesse et la densité des soies 52 assurent une étanchéité parfaite même quel que soit l'écart de pression de l'air entre les deux faces du joint 50, et quel que soit le déplacement relatif axial et radial entre la portion amont 12a du carter externe 12 et le manchon 53.

La figure 7 montre un deuxième mode de réalisation de l'invention. Ici le corps 51 du joint à brosse 50 est fixé dans la gorge périphérique 32 d'un anneau 60 de section en U, cet anneau 60 comporte des ailes 33a et 33b délimitant la rainure 32, et le corps 51 y est fixé par des rivets 34. Cet anneau 60 équipé du joint 50 est ensuite fixé à la périphérie de la partie amont 12a du carter externe 12 par soudure. L'anneau 60, ainsi que le joint 50 peuvent évidemment être sectorisés.

La figure 8 montre un troisième mode de réalisation de l'invention qui diffère de celui de la figure 7 par le fait que le joint à brosse 50, sectorisé ou non, présente dans sa zone radialement intérieure un anneau métallique 70 qui peut être fixé par soudure à la périphérie de la partie amont 12a du carter externe 12 de la grille de diffuseur.

## Revendications

1. Turboréacteur comportant d'amont en aval, l'amont et l'aval étant définis par le sens de la circulation du flux primaire, un compresseur (1) à haute pression, une grille de diffuseur (10) et une chambre de combustion, ledit compresseur à haute pression comportant une virole externe (6) délimitant radialement la veine dudit flux primaire et raccordée à une structure annulaire (7) qui s'étend radialement vers l'extérieur, ladite grille de diffuseur comportant dans le prolongement axial de ladite virole externe (6) de compresseur un carter externe (12) raccordé à un jambage (13) conique orienté vers l'arrière et délimitant en amont le fond de ladite chambre de combustion, ledit jambage étant lui-même raccordé à une virole externe de carter (14) qui s'étend vers l'amont et est fixée à ladite structure annulaire (7) par des moyens de fixation, ledit jambage, ladite virole externe de carter et ladite structure annulaire définissant une cavité (20) autour de ladite grille (10) de diffuseur, des orifices (22) de prélèvement d'air étant ménagés dans ledit jambage (13) pour mettre en communication le fond de chambre avec ladite cavité (20), ladite virole externe de carter étant équipée de bouches de prélèvement d'air (23), et des moyens d'étanchéité étant prévus entre ladite structure annulaire (7) et ledit carter externe (12) de grille de diffuseur pour isoler ladite cavité (20) de la veine du flux primaire,
**caractérisé par le fait que** les moyens d'étanchéité sont constitués par un joint à brosse (50) fixé à la périphérie de la partie amont (12a) du carter externe (12) de la grille du diffuseur, ledit joint (50) comportant des soies (52) qui s'étendent radialement vers l'extérieur et qui sont en appui sur la surface interne (54) d'un manchon (53) cylindrique solidaire de la structure annulaire (7) et entourant ledit joint à brosse (50).

2. Turboréacteur selon la revendication 1, **caractérisé par le fait que** la partie amont (12a) dudit carter externe (12) présente à sa périphérie une rainure (32), et le joint à brosse (50) est fixé dans ladite rainure (32) par des moyens de fixation (34).

3. Turboréacteur selon la revendication 1, **caractérisé par le fait que** le joint à brosse (50) est fixé par des moyens de fixation (34) dans la rainure périphérique (32) d'un anneau (60) de section en U et ledit anneau est fixé par soudure à la périphérie de la partie amont (12a) dudit carter externe.

4. Turboréacteur selon la revendication 1, **caractérisé par le fait que** le joint à brosse (50) présente dans sa zone radialement intérieure un anneau métallique (70), et ledit anneau (70) est fixé par soudure à la périphérie de la partie amont (12a) dudit carter externe (12).

## Patentansprüche

1. Turbostrahltriebwerk, das von stromauf nach stromab, wobei stromauf und stromab durch die Zirkulationsrichtung des Primärstroms definiert sind, einen Hochdruckverdichter (1), ein Diffusorgitter (10) und eine Brennkammer umfasst, wobei der Hochdruckverdichter einen Außenring (6) umfasst, der den Kanal des Primärstroms radial begrenzt und an eine ringförmige Struktur (7) angeschlossen ist, die sich radial nach außen erstreckt, wobei das Diffusorgitter in der axialen Verlängerung des Verdichteraußenrings (6) ein Außengehäuse (12) umfasst, das mit einer konischen Stütze (13) verbunden ist, die nach hinten gerichtet ist und stromauf den Boden der Brennkammer begrenzt, wobei die Stütze ihrerseits mit einem Gehäuseaußenring (14) verbunden ist, der sich in stromaufwärtige Richtung erstreckt und durch Befestigungsmittel an der ringförmigen Struktur (7) befestigt ist, wobei die Stütze, der Gehäuseaußenring und die ringförmige Struktur einen Hohlraum (20) um das Diffusorgitter (10) herum definieren, wobei Öffnungen (22) zur Luftentnahme in der Stütze (13) ausgebildet sind, um den Kammerboden mit dem Hohlraum (20) in Verbindung zu bringen, wobei der Gehäuseaußenring mit Luftentnahmeöffnungen (23) ausgestattet ist und wobei Dichtungsmittel zwischen der ringförmigen Struktur (7) und dem Diffusorgitter-Außengehäuse (12) vorgesehen sind, um den Hohlraum (20) von dem Kanal des Primärstroms zu isolieren,
**dadurch gekennzeichnet, dass** die Dichtungsmittel durch eine Bürstendichtung (50), die am Umfang des stromaufwärtigen Teils (12a) des Außengehäuses (12) des Diffusorgitters befestigt ist, gebildet sind, wobei die Dichtung (50) Borsten (52) umfasst, die sich radial nach außen erstrecken und die an der Innenfläche (54) einer zylindrischen Manschette (53), welche mit der ringförmigen Struktur (7) fest verbunden ist und die Bürstendichtung (50) umgibt, in Anlage sind.

2. Turbostrahltriebwerk nach Anspruch 1, **dadurch gekennzeichnet, dass** der stromaufwärtige Teil (12a) des Außengehäuses (12) an seinem Umfang eine Nut (32) aufweist und die Bürstendichtung (50) in der Nut (32) durch Befestigungsmittel (34) befestigt ist.

3. Turbostrahltriebwerk nach Anspruch 1, **dadurch gekennzeichnet, dass** die Bürstendichtung (50) durch Befestigungsmittel (34) in der Umfangsnut (32) eines Rings (60) mit U-förmigem Querschnitt befestigt ist und der Ring an dem Umfang des stromaufwärtigen Teils (12a) des Außengehäuses festgeschweißt ist.

4. Turbostrahltriebwerk nach Anspruch 1, **dadurch gekennzeichnet, dass** die Bürstendichtung (50) in ihrem radial inneren Bereich einen Metallring (70) aufweist und der Ring (70) an dem Umfang des stromaufwärtigen Teils (12a) des Außengehäuses (12) festgeschweißt ist.

## Claims

1. A jet engine comprising, from upstream to downstream, the upstream and downstream directions being defined by the direction of circulation of the primary flow, a high-pressure compressor (1), a diffuser grating (10) and a combustion chamber, said high-pressure compressor comprising an external shell (6) which radially delimits the duct for said primary flow and is connected to an annular structure (7) extending radially outward, said diffuser grating comprising in the axial continuation of said external compressor shell (6) an external casing (12) connected to a rearwardly oriented conical strut (13) delimiting, upstream, the end of said combustion chamber, said strut itself being connected to an external casing shell (14) which extends in the upstream direction and is fastened to said annular structure (7) by fastening means, said strut, said external casing shell and said annular structure defining a cavity (20) around said diffuser grating (10), air bleed orifices (22) being made in said strut (13) in order to bring the end of the combustion chamber into communication with said cavity (20), said external casing shell being equipped with air bleed vents (23), and sealing means being provided between said annular structure (7) and said external diffuser grating casing (12) in order to isolate said cavity (20) from the duct for the primary flow,
**characterized in that** the sealing means consist of a brush seal (50) fastened to the periphery of the upstream part (12a) of the external casing (12) of the diffuser grating, said seal (50) having bristles (52) which extend radially outward and bear against the internal surface (54) of a cylindrical sleeve (53) which is integral with the annular structure (7) and surrounds said brush seal (50).

2. The jet engine according to claim 1, **characterized in that** the upstream part (12a) of said external casing (12) has a groove (32) at its periphery, and the brush seal (50) is fastened into said groove (32) by fastening means (34).

3. The jet engine according to claim 1, **characterized in that** the brush seal (50) is fastened by fastening means (34) into the peripheral groove (32) of a ring (60) having a U-shaped cross section and said ring is fastened by welding to the periphery of the upstream part (12a) of said external casing.

4. The jet engine according to claim 1, **characterized in that** the brush seal (50) has a metal ring (70) in its radially inner region, and said ring (70) is fastened by welding to the periphery of the upstream part (12a) of said external casing (12).
